# EUROPEAN PATENT SPECIFICATION

(11) **EP 3 693 586 B1**
(45) Date of publication and mention of the grant of the patent: **20.11.2024**
(21) Application number: 20158880.3
(22) Date of filing: 12.04.2018
(51) Int. Cl.: F02D 17/02, F02D 29/02, F02D 41/00, F02D 41/12, B60W 20/00, B60W 10/06, B60W 10/08, B60W 30/188, F02D 41/02, B60W 10/02, B60W 20/40, B60W 30/18

(54) **DECELERATION CYLINDER CUT-OFF IN A HYBRID VEHICLE**
ZYLINDERABSCHALTUNG WÄHREND VERZÖGERUNG IN EINEM HYBRIDFAHRZEUG
COUPURE DE CYLINDRES DE DÉCÉLÉRATION DANS UN VÉHICULE HYBRIDE

(30) Priority: 02.05.2017 US 201715584686; 19.12.2017 US 201715847481
(43) Date of publication of application: 12.08.2020
(62) Divisional of application: 18795112.4
(73) Proprietor: Tula Technology, Inc., San Jose, CA 95131 (US)
(72) Inventor: Serrano, Louis J., Los Gatos, CA California 95032 (US); Wang, Robert C., San Jose, CA California 95113 (US); Yuan, Xin, Palo Alto, CA California 94306 (US)
(74) Representative: Fleuchaus & Gallo Partnerschaft mbB

(56) References cited:
- EP-A2- 1 077 149
- WO-A1-2016/153837
- CN-A- 101 085 596
- DE-A1- 102016 200 113
- US-A1- 2008 078 593
- US-A1- 2016 121 875
- US-A1- 2017 313 315
- US-B2- 8 157 035
- US-B2- 8 355 860

## Description

### CROSS REFERENCE TO RELATED APPLICATIONS

This application claims priority of U.S. Patent Application No. 15/584,686, filed on May 2, 2017 (TULAP048X1) and U.S. Patent Application No. 15/847,481 filed on December 19, 2017 (TULAP048X2),

### FIELD

The present invention relates generally to control strategies for supporting deceleration cylinder cut-off during operation of an internal combustion engine.

### BACKGROUND

Fuel economy is a major consideration in engine design. One fuel savings technique that is frequently used in automotive engines is referred to as deceleration fuel cut-off (DFCO - sometimes referred to as deceleration fuel shut-off, DFSO). This mode of operation is typically used during deceleration of an engine/vehicle, when no torque request is present (e.g., when the accelerator pedal is not depressed). During DFCO, fuel is not injected into the cylinders thereby providing a corresponding improvement in fuel economy.

Although deceleration fuel cut-off improves fuel efficiency, it has several limitations. Most notably, although fuel is not injected into the cylinders, the intake and exhaust valves still operate thereby pumping air through the cylinders. Pumping air through the cylinders has several potential drawbacks. For example, most automotive engines have emissions control systems (e.g. catalytic converters) that are not well suited for handling large volumes of uncombusted air. Thus, operation in a deceleration fuel cut-off mode for extended periods of time can result in unacceptable emissions levels. Therefore, operation in a DFCO mode is typically not permitted for extended periods of time and often involves undesirable emissions characteristics. Additionally, work is required to pump air through the cylinders which limits the fuel savings.

In principle, the fuel savings associated with DFCO can be further improved by deactivating the cylinders such that air is not pumped through the cylinders when fuel is not delivered rather than simply cutting off the fuel supply. This cylinder deactivation approach may be referred to as deceleration cylinder cutoff (DCCO) rather than DFCO. Deceleration cylinder cutoff offers both improved fuel economy and improved emissions characteristics. The fuel economy improvement is provided in part by the reduction of losses due to pumping air through the cylinders. Fuel economy may be further improved by operating in DCCO mode for longer time periods than DFCO mode, since oxygen saturation of an exhaust system catalyst is less of an issue. The emissions improvement is due to the fact that large volumes of air are not pumped through the cylinders into the exhaust system during DCCO.

Although deceleration cylinder cutoff offers the potential of significant improvements in fuel economy and emissions characteristics, it involves a number of challenges that have hindered its commercial adoption. Indeed, the applicants are not aware of DCCO being used in commercial vehicle applications. Therefore, improved engine control strategies that facilitate the use of deceleration cylinder cutoff would be desirable. The present application describes techniques and control strategies that facilitate the use of deceleration cylinder cutoff. WO 2016/153837 A1, US 8 157 035 B2, US 8 355 860 B2 and US 2008/078593 A1 disclose hybrid drive trains and their control.

### SUMMARY

The invention is defined by the subject-matter of claim 1. Advantageous embodiments are subject of the dependent claims. Methods for transitioning an engine to and from deceleration cylinder cutoff state in a hybrid vehicle, having an internal combustion engine and electric motor/generator, are described. The hybrid vehicle may be configured such that the engine and motor are directly coupled and their torque outputs cannot independently provide motive power to drive a vehicle. According to the invention, all of an engine's working chambers are deactivated in response to a no torque request such that none of the working chambers are fired and no air is pumped through the working chambers as the crankshaft rotates. Subsequent to the deactivation of all of the working chambers, the engine is disengaged from the vehicle drive train so that the vehicle motion and crankshaft rotation are no longer mechanically coupled. The crankshaft rotation rate is then controlled while the engine is disengaged from the drive train by adding or removing torque from the crankshaft by the electric motor/generator, the crankshaft rotation rate being controlled to ensure that the crankshaft continues to rotate throughout the duration of the no torque request, wherein the engine is kept spinning at a low speed, such as an engine ignition speed or engine idle speed. In some embodiments, the crankshaft rotation is allowed to stop while the vehicle remains in motion. According to the invention, In the motor/generator controls crankshaft rotation at some desired rotation rate, such as an engine idle speed or engine ignition speed.

In another aspect, the engine is started in response to a torque request. If the engine is stopped, some or all of an engine's working chambers are deactivated as the electric motor/generator supplies torque to spin-up the engine. Fueling and ignition begin when the crankshaft rotation rate equals or exceeds an engine ignition speed. In some aspects an intake manifold that provides an air reservoir for engine air induction is pumped down so its pressure is reduced prior to fueling any of the working chambers.

### BRIEF DESCRIPTION OF THE DRAWINGS

The invention and the advantages thereof, may best be understood by reference to the following description taken in conjunction with the accompanying drawings in which:
Fig. 1 is a flow chart illustrating a method implementing cylinder cut-off in accordance with a nonexclusive embodiment of the present invention.
Fig. 2 is a flow chart illustrating a nonexclusive method of transitioning out of a DCCO mode to an operating mode.
Fig. 3 is a flow chart illustrating a nonexclusive method of transitioning out of a DCCO mode to an idle mode.
Fig. 4 is a functional block diagram of a skip fire controller and engine controller suitable for use in conjunction with a nonexclusive embodiment of the present invention that incorporates skip fire control.
Fig. 5 is a representative schematic layout of a powertrain.
Fig. 6 is a representative timing diagram for a transition into and out of DCCO mode.
Fig. 7 is a functional block diagram of a skip fire controller and engine controller suitable for use in conjunction with another nonexclusive embodiment of the present invention that incorporates skip fire control.

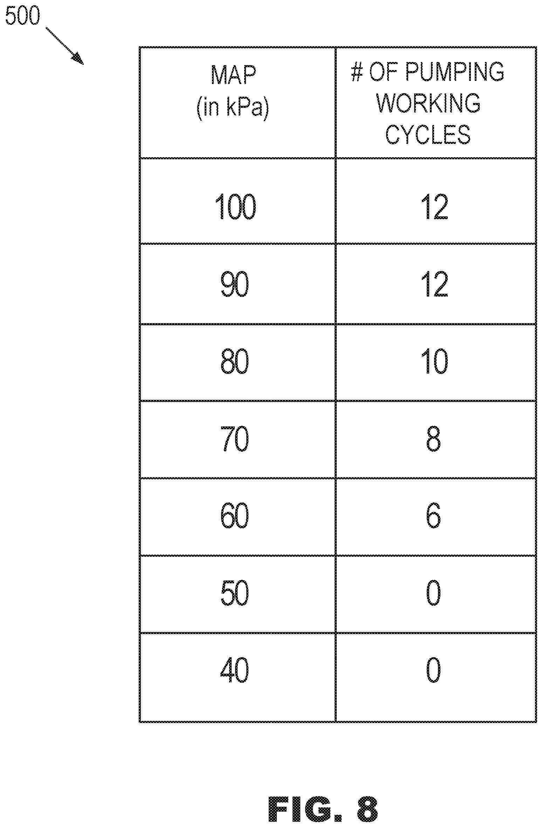

Fig. 8 is a look up table providing a number of pumping working cycles for different intake manifold pressure values in accordance with a non-exclusive example of the present invention.
Figs. 9A-9D shows changes in various engine parameters during a transition from torque generation to DCCO to idle in accordance with a non-exclusive embodiment of the invention.

In the drawings, like reference numerals are sometimes used to designate like structural elements. It should also be appreciated that the depictions in the figures are diagrammatic and not to scale.

### DETAILED DESCRIPTION OF THE PREFERRED EMBODIMENTS

A number of control strategies for supporting deceleration cylinder cut-off during operation an internal combustion engine are described.

As suggested in the background, there are several challenges associated with implementing deceleration cylinder cutoff. One such challenge is associated with intake manifold pressure. Specifically, when all of the cylinders are de-activated, no air is withdrawn from the intake manifold. At the same time, leakage around the throttle and intake system will cause the manifold to fill towards barometric pressure. Therefore, when the cylinders are reengaged, more torque may be provided by each cylinder firing then desired which can result in undesirable NVH (noise, vibration and harshness) characteristics. One potential way to address the NVH effects is to transitorily retard the spark in a manner that reduces the engine output enough to mitigate the NVH concerns. Although this approach can work, it has the drawback of wasting fuel during the cylinder firing opportunities in which spark retard is used.

In one aspect, Applicants propose another approach that can help mitigate transitional NVH issues during transitions from a DCCO (cylinder cut-off) mode to an operational mode. Specifically, as the transition is made from a DCCO (cylinder cutoff) mode to an operational mode, some or all of the cylinders are briefly activated to pump air before they are fueled and fired. Pumping air through the cylinders can be used to draw down the manifold pressure to a desired level before the targeted operation is initiated. This can be thought of as transitioning from a DCCO (cylinder cut-off) to a DFCO (fuel cut-off) mode before transitioning to a cylinder firing mode. Reducing the manifold pressure before resuming firings can help improve the NVH characteristics associated with the transition while reducing or sometimes even eliminating the need to utilize more wasteful techniques such as spark retard.

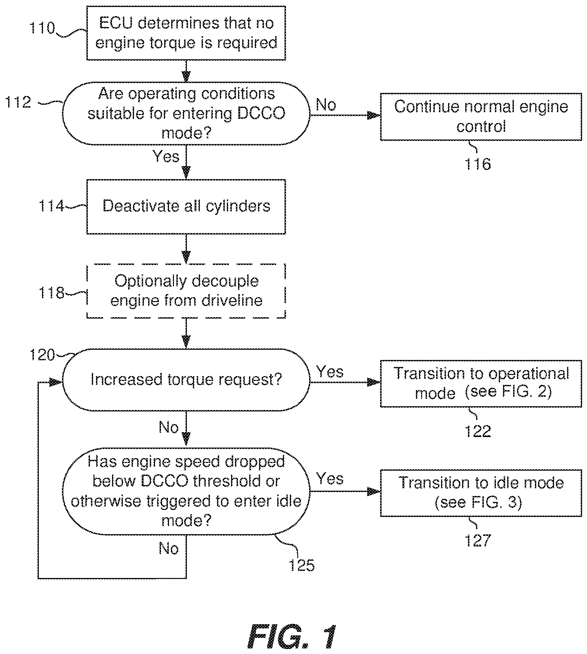

Referring next to the flow chart of Fig. 1, a method of implementing DCCO will be described. Initially, during operation of an engine, the engine controller (e.g., a power train control module (PCM), an engine control unit (ECU), etc.) determines that cylinder cutoff is appropriate based on current operating conditions as represented by boxes 110, 112. A common scenario that leads to the determination that cylinder cutoff is appropriate is when the driver releases the accelerator pedal (sometimes referred to as accelerator "tip-out"), which frequently occurs when the driver desires to slow down (this use case has lead to the use of phrase "deceleration" cylinder cutoff - DCCO). Although deceleration tends to be one of the most common trigger for entering a cylinder cutoff mode, it should be appreciated that cylinder cutoff (referred to as DCCO) may be appropriate in a variety of other circumstances as well, as for example: (a) when the accelerator pedal is released while the vehicle is traveling downhill regardless of whether the vehicle is accelerating or decelerating; (b) during transmission shift events or other transitory events where it may be desirable to transitorily reduce the net engine torque; etc. Generally, the engine control designer may specify any number of rules that define the circumstances in which DCCO is, or is not, deemed appropriate.

Most scenarios in which DCCO is appropriate correspond to circumstances where engine torque is not required to drive the vehicle. Therefore, the flowchart of Fig. 1 begins at 110 where an initial determination is made that no engine torque is required. When no torque is required the logic determines whether operating conditions are suitable for entering a DCCO mode in step 112.

It should be appreciated that there may be a number of no engine torque operating conditions in which it might not be desirable to go into DCCO mode. For example, in most non-hybrid engines, it is desirable to keep the crankshaft rotating at some minimum speed (e.g. at an idle speed) while the vehicle is being operated. Therefore, the engine operating rules may dictate that a DCCO mode will only be entered when the crankshaft is spinning at speeds above a designated DCCO entry engine speed threshold thereby preventing entry into the DCCO mode when the engine is operating at an idle or near idle engine speed. Similarly, in many applications it may not be possible to fully decouple the crankshaft from the driveline. Thus, the engine operating rules may dictate that the DCCO mode may not be entered when the vehicle is stopped or moving slowly - e.g., traveling a speed lower than a DCCO entry threshold vehicle speed - which may vary as a function of gear or other operating conditions. In another example, DCCO may not be appropriate when engine braking is desired, as may be the case when the driver is braking and/or driving in a lower gear. In yet another example, DCCO may be inappropriate while certain diagnostic tests are being performed. DCCO operation may also be undesirable (or specifically desirable) during certain types of traction control events, etc. It should be appreciated that these are just a few examples and there are a wide variety of circumstances in which DCCO may be deemed appropriate or inappropriate. The actual rules defining when DCCO operation is and is not appropriate can vary widely between implementations and are entirely within the discretion of the engine control designer.

In the flowchart, the no engine torque and DCCO entry determinations are illustrated as being distinct steps. However, it should be appreciated that there is no need for these decisions to be distinct. Rather the amount of torque required at any particular time may simply be part of the rules determining when DCCO operation is deemed appropriate.

If entering a DCCO mode is deemed appropriate, all of the cylinders are deactivated as represented by box 114. Alternatively, if DCCO engine operation is not appropriate at the present time, then the DCCO mode is not entered and the engine may be controlled in a conventional manner as represented by box 116.

When the DCCO mode is entered, there are several ways that the cylinders may be deactivated. In some circumstances, each of the cylinders is deactivated in the next controllable working cycle after the decision to enter a DCCO mode is made (i.e., effective immediately). In other circumstances, it may be desirable to more gradually ramp the firing fraction down to DCCO using a skip fire approach in which some working cycles are fired and other working cycles are skipped. The skip fire ramp down approach works well when the engine is transitioning from a skip fire mode to a DCCO mode. However, it should be appreciated that the skip fire ramp down approach can also be used to facilitate transitioning to DCCO from "normal" all cylinder operation of an engine, or to DCCO from a variable displacement mode with a reduced displacement is being used (e.g., when operating using 4 of 8 cylinders, etc.).

When a gradual transition is utilized, the firing fraction may be gradually reduced until a threshold firing fraction is reached, at which point all of the cylinders may be deactivated. By way of example, firing fraction thresholds in the range of 0.12 to 0.4 are believed to work well for most ramping type applications. During the gradual reduction, the working chambers associated with skipped working cycles are preferably deactivated during the skipped working cycles - although this is not a requirement. If the engine is operating in a skip fire mode at a firing fraction below the firing fraction threshold when the DCCO mode entry decision is made, then all of the cylinders can be deactivated in their next respective working cycles.

There are times when it may be desirable to decouple the crankshaft from the transmission or other portion of the driveline. Therefore, when the DCCO mode is entered, the power train controller may optionally direct a torque converter clutch (TCC) or other clutch or driveline slip control mechanism to at least partially decouple the crankshaft from the transmission to reduce the coupling between vehicle speed and engine speed as represented by box 118. The extent of the decoupling that is possible will tend to vary with the specific driveline slip control mechanism(s) that is/are incorporated into the powertrain. There are a number of operating conditions where it may be desirable to mechanically decouple the engine from the drive line. For example, decoupling is desirable when the vehicle speed is zero, but the engine speed is not. During deceleration is may also be desirable to decouple the engine from the driveline, especially when a brake is being used. Other conditions such as transmission shifts also frequently benefit from decoupling the engine from the driveline.

A characteristic of DCCO (cylinder cutoff) is that the engine has less resistance than it would during DFCO (fuel cutoff) due to the reduction of pumping losses. In practice, the difference is quite significant and can readily be observed when the engine is effectively disengaged from the transmission. If permitted, DFCO pumping losses would cause many engines to slow to a stop within a period on the order of a second or two at most, whereas the same engine may take 5-10 times as long to slow to a stop under DCCO (cylinder cutoff). Since DFCO arrests the engine quite quickly, it is common to keep the drive train engaged during DFCO, which means that the engine tends to slow with the vehicle and the pumping losses associated with DFCO contribute to engine braking. In contrast, when DCCO is used, the engine can be disengaged from the transmission to the extent permitted by the drive train components (e.g., a torque converter clutch (TCC), a dual-clutch transmission, etc.). In practice, this allows DCCO to be used for much longer periods than DFCO in certain operating conditions.

The engine remains in the DCCO mode until the ECU determines that it is time to exit the DCCO mode. The two most common triggers for exiting the DCCO mode tend to be either when a torque request is received or when the engine slows to a speed at which idle operation is deemed appropriate. Further reduction in engine speed may result in an undesired engine stall, so the engine is placed in idle operation to avoid stalling. Often, a torque request is caused by the accelerator pedal being depressed (sometimes referred to herein as accelerator tip-in). However, there may be a variety of other scenarios that require torque that are independent of accelerator pedal tip-in. For example, these types of scenario may occur when accessories such as an air conditioner, etc. require torque. Many vehicle air conditioners are activated by engagement of an air conditioner clutch to the vehicle power train, placing an additional torque load on the engine.

In one embodiment, if a request for an accessory torque load is received during DCCO operation mode, that request is denied until DCCO mode operation is completed. A key advantage of prohibiting engagement of an accessory, such as an air conditioner, during DCCO is that torque demand on the engine will continue to be zero during the DCCO period. The air conditioner can be engaged as soon as the engine is no longer in DCCO mode without impact vehicle occupant comfort. This preserves engine speed without prematurely shifting the engine out of DCCO mode. A key advantage of allowing continued DCCO operation is that fuel economy may be improved.

In another embodiment, a request for an accessory torque load, such as air conditioner engagement, may result in termination of DCCO mode. In this embodiment, the actual increase in the engine load, such as the engagement of the air conditioner clutch, may be slightly delayed to allow time to smoothly transition out of DCCO using the methods described herein. By appropriately adjusting the engine parameters in advance of air conditioner engagement, an undesired change in brake torque can be avoided. Alternatively, in some embodiments the vehicle torque converter may be locked in anticipation of or coincident with the addition of an auxiliary load. In this case vehicle momentum will assist in powering the auxiliary load so that engine speed may be maintained while in DCCO mode.

In another embodiment, a request for an accessory torque load may result in setting a timer that will terminate DCCO mode after a fixed time period, for example 10 or 20 seconds. Since most DCCO mode operational periods will be less than 10 or 20 seconds, this embodiment will generally allow DCCO operation to continue without premature termination. This embodiment may be useful in cases such as going down an extended downhill slope, where vehicle occupants may become uncomfortable if the vehicle air conditioner remains off for extended periods.

When a request for increased torque is received (as indicated by box 120), the engine transitions to an operational mode that delivers the desired torque as represented by box 122. Alternatively, if the engine speed slows below a DCCO threshold or the engine is otherwise triggered to enter an idle mode (as indicated by box 125), the engine transitions to an idle mode as represented by box 127.

As discussed above, when all of the cylinders are de-activated, no air is withdrawn from the intake manifold. At the same time, leakage around the throttle and intake system will cause the manifold to fill towards barometric pressure. Therefore, when the cylinders are reengaged, more torque may be provided by each cylinder firing then desired which can result in undesirable NVH (noise, vibration and harshness) characteristics. This is a particular concern when transitioning to an idle mode or other mode in which relatively little power is required. Thus, for example, when transitioning out of DCCO mode into an idle mode, it is often desirable to reduce the manifold pressure to a target pressure more suitable for initiating idle operation. This can be accomplished by opening the intake and exhaust valves during a set of working cycles to thereby draw air out of the intake manifold and pass such air out through the exhaust unburnt. This is sometimes referred to herein as a DFCO working state because it contemplates pumping of air through the cylinders without injecting fuel into the cylinders as typically occurs during DFCO operation.

The actual target air pressure to initiate idle operation will vary in accordance with the design goals and needs for any particular engine. By way of example, target manifold pressures in the range of approximately 0.3 to 0.4 bar are appropriate for transitioning to idle in many applications.

The number of DFCO working cycles that would be required to reduce the manifold pressure to any given target pressure will vary with a variety of factors including the initial and target manifold pressures, the size of the intake manifold relative to the cylinders, and the rate of air leakage past the throttle. The manifold and cylinder sizes are known, the air leakage past the throttle can readily be estimated and the current intake manifold pressure can be obtained from an intake manifold pressure sensor. Therefore, the number of working cycles required to reduce the manifold pressure to a given target pressure can readily be determined at any time. The engine controller can then activate the cylinders to pump air for the appropriate number of working cycles.

Transitions to operating conditions other than idle can be handled in much the same manner except the target manifold pressure may be different based on the torque request and potentially various current operational conditions (e.g., engine speed, gear, etc.). When higher manifold pressures are desired, less DFCO pumping is required to attain the desired manifold pressure.

Although the actual number of working cycles that are appropriate to pump down the manifold pressure to the desired level will vary, typical scales are on the order of 1 to 4 engine cycles and more preferably 1 to 2 engine cycles. (In a 4-stroke engine, each engine cycle constitutes two revolutions of the crankshaft). Thus the manifold pressure reduction can typically be accomplished quite quickly (e.g. within 0.1 or 0.2 seconds) even when an engine is approaching idle speeds. Such a response is quite adequate in many operating situations.

There may be times when a faster response to a torque request is desired and it may be desirable to begin delivering torque before the manifold pressure can be reduced to a desired level using pure DFCO. There are several ways that a faster response can be provided. For example, when torque is first requested, the engine can initially be operated in a skip fire mode in which air is pumped through the cylinders during skipped working cycles rather than deactivating the skipped cylinders. In other cases, a transitional mode where some cylinders are firing, some are deactivated, and some are pumping air may be used. This has an advantage of providing quick response by starting to fire earlier and the benefit of reducing the overall level of oxygen pumped to the catalyst by not pumping through all non-firing cylinders at the same time. The actual decisions to fire/deactivate/pump depend on the level and urgency of the torque request.

Meeting the initial torque request using skip fire operation tends to reduce the initial torque impulse and corresponding harshness of the transition, and pumping air during skipped working cycles helps quickly reduce the manifold pressure. Alternatively, somewhat similar benefits may be obtained by activating and firing one fixed set of cylinders while pumping air through a second set of cylinders (which can be thought of as operating the second set of cylinders in a DFCO mode).

When desired, the torque output of the fired cylinders can be further mitigated as desired using spark retard or other conventional torque reduction techniques.

It should be appreciated that DCCO mode operation can be used in hybrid vehicles, which use both an internal combustion engine and electric motor to supply torque to the drive train. Use of DCCO operation mode allows more torque to be devoted to charging a battery that can power the electric motor. Energy from the battery may also be used to drive an accessory, such as an air conditioner, so operation of the air conditioner will not impact DCCO mode operation. DCCO mode operation may also be used in vehicles having start/stop capabilities, i.e. where the engine is turned off automatically during a drive cycle. In the later case, DCCO mode operation may be maintained at engine idle or lower engine speeds, since there is no longer a requirement to maintain continuous engine operation.

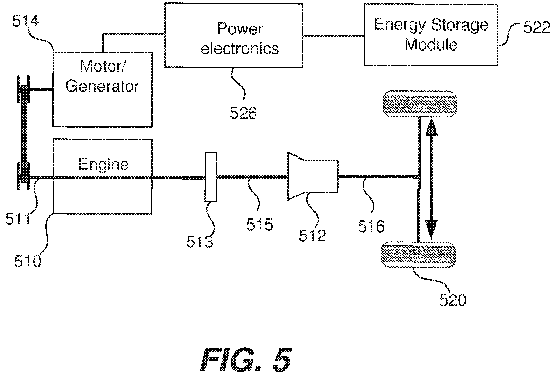

FIG. 5 show a schematic layout of a powertrain according to an embodiment of the current invention. A DCCO enabled internal combustion engine 10 is capable of applying torque to a crankshaft 511 which is connected to a disengagement device 513, such as a clutch, dual clutch or torque converter. The disengagement device 513 allows controlled slippage between the engine 510 and a transmission input 515. The transmission input 515 supplies motive power to the transmission 512, which varies the relative rotation rates of the transmission input 515 to the drive shaft 516. The transmission 512 may have a number of fixed gears or may be a continuously variable transmission. The drive shaft 516 in turn drives selected wheels 520 of a vehicle. A differential, not shown in FIG. 5, may be incorporated into the powertrain to allow different rotation rates between wheels. An electric motor/generator 514 is also coupled to the crank shaft and is capable of either generating electrical power (thereby effectively subtracting torque from the crankshaft 511) or supplementing the engine torque (adding torque to crankshaft 511). The motor/generator 514 can be mechanically coupled to the crankshaft 511 using a belt, chain, gears, or any suitable means. In some embodiments, the motor/generator may be integrated with the crankshaft such that both engine and motor/generator torque are applied to and removed from a common shaft. The powertrain may be incorporated into a hybrid vehicle suitable for personal transportation, although it may be incorporated into other applications requiring motive power. The hybrid vehicle may have stop/start capabilities such that the engine automatically turns off when there is no torque demand and is automatically restarted when engine torque is again required.

When the engine produces surplus torque, the surplus torque causes the electric motor/generator 514 to generate electricity which gets stored in the energy storage module 522 after conditioning by power electronics 526. The power electronics 526 may include circuitry to convert the output voltage of the energy storage module 522 to a voltage suitable for delivering/receiving power from the motor/generator 514. This circuitry may include DC to DC converters to match voltages of the various electrical system components. The energy storage module 522 may contain a battery, capacitor, or a combination of both a battery and capacitor. Use of a capacitor to store surplus energy leads to a large improvement in overall vehicle fuel economy, since it largely avoids the energy losses associated with charging and discharging conventional batteries. Capacitor energy storage is particularly advantageous when relatively frequent storage and retrieval cycles are contemplated.

The motor/generator 514, power electronics 526, and energy storage module 522 are part of a kinetic energy recover system (KERS) that allows kinetic energy associated with vehicle motion to be stored for later use. Other types of KERSs may use a flywheel or compressible fluid to store and release kinetic energy associated with vehicle motion. Each DCCO event, where the engine is shutdown, i.e. when the cylinders are deactivated, but the engine is not necessarily stopped, and the vehicle is decelerating is a potential opportunity to store excess kinetic energy in the energy storage module 522.

The powertrain shown in FIG. 5 may be referred to as a P₀ type hybrid configuration, where the motor/generator is connected to the crankshaft on the side of the engine opposite the disengagement device and transmission. In this type of configuration, the motor/generator and engine can rotate together, often being mechanically connected with a belt, while being mechanically isolated from the wheels and drive train by the disengagement device. The motor cannot supply motive power to drive the vehicle without rotating the engine crankshaft. A P₀ hybrid configuration may be implemented as part of a front end accessory drive (FEAD), which provides for low cost integration of hybrid functionality into a vehicle. A P₁ hybrid configuration, where the motor/generator is connected to the crankshaft on the same side of the engine as the transmission, but before the disengagement device, also has the characteristic that the motor/generator and engine can spin together independent of the drive train. It should be appreciated that a clutch or some other disengagement mechanism may exist between the motor/generator and engine so that they do not always need to be spinning together. In the P₀ and P₁ hybrid configurations the electric motor/generator and engine cannot independently mechanically engage with the drive train. The P₀ and P₁ hybrid configurations are in contrast to other hybrid configurations where the engine and motor can be directly and independently coupled to the drive train. While the current invention is potentially applicable to all types of hybrid vehicles, it is particularly applicable to hybrids using the P₀ or P₁ configuration.

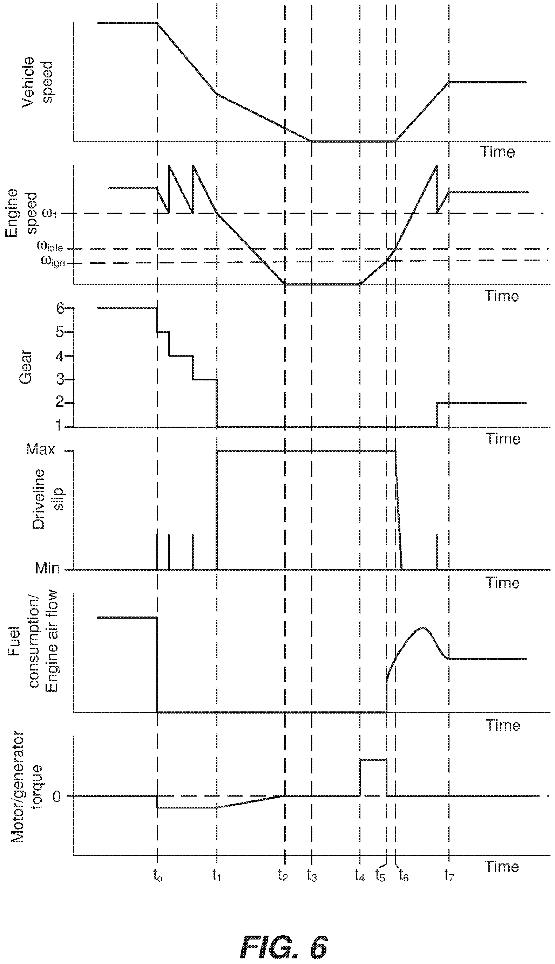

FIG. 6 depicts a simplified schematic of representative behavior of various engine parameters versus time during a DCCO event in which a hybrid vehicle, having start/stop capabilities, comes to a complete stop. Initially the vehicle is assumed to be operating using only the engine as a power source. The vehicle is operating at highway speeds and its transmission is in 6^{th} gear. The DCCO event begins at time t₀ when fuel consumption is cut-off in response to a request for zero powertrain torque. Since neither the engine, nor motor/generator, is producing torque, the vehicle and engine speed both decrease due to frictional power losses. In the embodiment shown in FIG. 6 the disengagement device is maintained in a minimal slip condition and both the engine speed and vehicle speed drop in unison. The motor/generator may also store energy taken from the vehicle's and powertrain's momentum during the deceleration period, as shown by the motor/generator torque curve going negative at t₀. The vehicle deceleration rate can be controlled by changing the level of torque withdrawn from the crankshaft. The deceleration rate is faster if more torque is removed, since more of the vehicle's kinetic energy is being converted to stored energy. The proportion of energy stored may vary with the requested deceleration rate such that more energy is stored as the deceleration rate increases, up to some maximum value set by either the total storage capacity of the energy storage module or the power handing capability of the motor/generator and power electronics. If faster deceleration rates are desired brakes can be used.

As the vehicle and engine speed drop, the transmission down shifts to maintain the engine speed at or above a shift speed ω₁, which is suitable speed for generation of engine torque should such a request be made. This shift engine speed may be in the range of 1000 rpm although the exact speed may be higher or lower depending on details of the engine design. The disengagement device may momentarily disengage and allow slip during these gear shift events. At time t₁ the engine speed reaches ω₁ while the transmission is in third gear. At this point in time the disengagement device decouples the engine crankshaft from the transmission input, so that engine and motor/generator rotation is no longer coupled to vehicle motion. The vehicle deceleration rate slows, since the frictional losses of the engine and motor/generator are no longer slowing the vehicle.

At time t₂ the engine speed drops to zero due to frictional power losses and removal of crankshaft torque by the motor/generator. At time t₂ the torque withdrawn by the motor/generator from the crankshaft must also be zero, since the crankshaft is no longer in motion. The vehicle continues to move and eventually comes to rest at time t₃. Between times t₃ and t₄ the engine is off and the vehicle is stopped. While the disengagement device is shown as being in a high slip state, it may move to a low slip state, since the vehicle and engine have the same speed, i.e. zero.

At time t₄ a request for torque is again made. Since the engine is stopped, the motor/generator must restart the engine so that it can begin to supply torque. The cylinders may be deactivated so that no air is pumped through the engine as the crankshaft begins to rotate. The disengagement device should be in a high slip condition so that the engine can start without having the extra torque demands of moving the vehicle. With no air pumping, advantageously there is minimal to no pumping losses at engine start. The motor/generator supplies a positive torque to the crankshaft increasing the engine speed until it reaches an engine ignition speed, ω_{ign}. At this point, t₅, the engine is spinning fast enough that it can sustain stable combustion. The engine ignition speed may be in the vicinity of 300 rpm. Higher engine ignition speeds may be used to reduce NVH. Once engine combustion begins the motor/generator supplied torque may return to zero.

At this point, t₅, fuel is once again injected into the engine and the engine speed increases due to the energy released by fuel combustion. At time t₆, which occurs at or near the time the engine reaches idle speed, ω_{idle}, the disengagement device can begin to mechanically couple the crankshaft with the transmission input to initiate vehicle motion. As the vehicle begins moving, the electric motor may begin to supply torque to the drive train to propel the vehicle toward the proper speed prior to re-engagement of the disengagement device 513 (note, this mode may not apply to the P₀ and P₁ hybrid configurations where the engine and motor speed are inherently matched).The vehicle transmission may be in first gear, which has the lowest ratio of wheel rotation to engine rotation. As the engine and vehicle speed increase the transmission may experience one or more gear up shifts to maintain the engine speed in an optimal operating region. In the example shown in FIG. 6 a new steady-state vehicle speed is reached at time t₇, with the engine in second gear. The fuel consumption here is lower than at the initial condition prior to t₀ because the vehicle speed is lower.

During DCCO the intake manifold absolute pressure (MAP) rises to substantially atmospheric pressure, since no air is being removed from the manifold by pumping it through the engine. When the engine begins its restart at t₄, MAP is thus at or near atmospheric pressure. In conventional engine control, the intake and exhaust valves open and close during the time period between t₄ and t₅. This pumped air both cools the catalytic converter and alters the oxidation/reduction balance in the converter. To avoid these problems, the intake and/or exhaust valves may remain closed during the period between t₄ and t₅ when the motor/generator is spinning the engine up to engine ignition speed ω_{ign}. In this way, no uncombusted air is pumped through the engine and the catalytic converter oxidation/reduction balance is not altered during the restart.

To further smooth the engine torque delivery during restart, the engine may be operated in a skip fire manner as described in U.S. patent 9,387,849, which is incorporated herein by reference in its entirety for all purposes, to restart a vehicle. This patent discusses how to avoid a torque bump associated with restarting an engine when the intake manifold pressure is at or near atmospheric pressure. The engine restart can occur either from a complete vehicle and engine stop or an engine stop while the vehicle is still in motion. In some embodiments, during a restart some skipped cylinders may not have their valves deactivated, so that they pump air through the engine reducing the pressure in an intake manifold that provides an air reservoir for engine air induction. Pumping down the intake manifold pressure may reduce a potential torque surge from restarting the engine. While this may require some rebalancing of the oxidation/reduction balance in the catalytic converter, the amount of fuel required to rebalance the catalyst is typically less than required following a start without cylinder deactivation or a DFCO event. The motor/generator may also remove torque to mitigate a potential engine speed surge at the onset of ignition.

It should be appreciated that there are many variations on relative timing and magnitude of the parameters shown in FIG. 6. For example, the vehicle could stop prior to the engine stopping or they could stop at substantially the same time. If a slow deceleration rate is desired, the motor/generator need not store energy during the time interval between t₀ and t₂. Also, the shape of the motor/generator torque curve may vary depending on the requested deceleration rate. The motor/generator may be used to help supply motive power to the vehicle during start up, during acceleration, or while cruising. Rather than the engine coming to a complete stop, the crankshaft rotation rate may be controlled by adding or removing torque from the crankshaft by the electric motor/generator. According to the invention, the engine is kept spinning at a relatively low speed, such as the engine ignition speed or idle speed, Maintaining the engine spinning at these speeds reduces the time required for the engine to again supply torque in response to a torque request. It should be appreciated that the time scale depicted in FIG. 6 may not be uniform. For example, the time between points t₀ and t₁ may be many seconds, while the time between points t₄ and t₆ may be on the order of or less than a second.

The concept of cylinder deactivation in a hybrid vehicle may be applied more broadly than just during vehicle deceleration. Anytime the requested torque necessary to drive the vehicle is within the capabilities of the motor/generator, the motor/generator may be used to deliver all necessary torque. Such instances may include, but are not limited to, creeping forward or maintaining a cruising speed. In these cases, while the vehicle remains in motion and the crankshaft remains rotating, no air is pumped through the engine and thus the catalytic converter may not require rebalancing of the oxidation/reduction balance when engine operation is resumed.

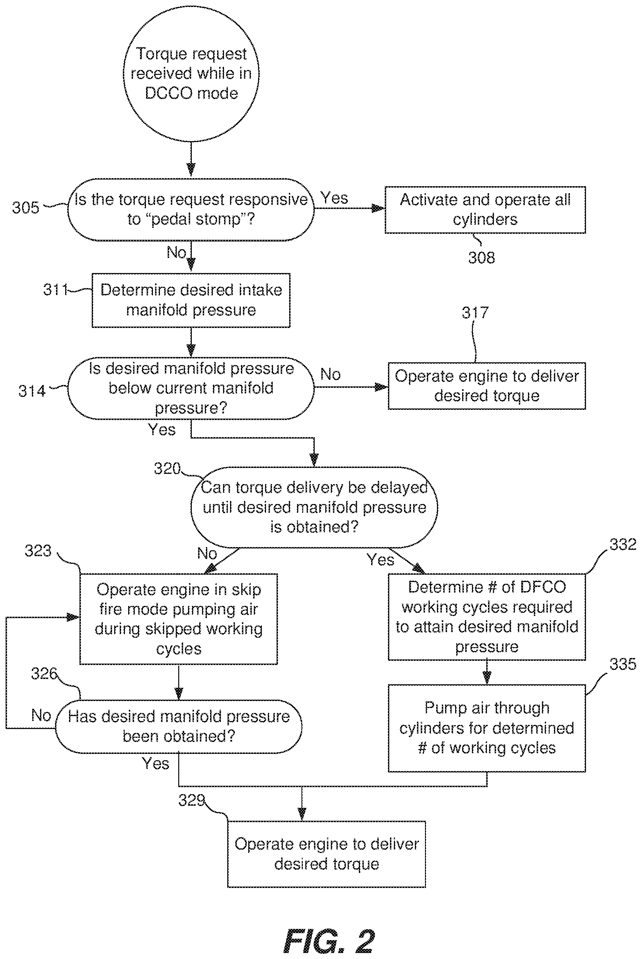

The transition control rules and strategies used to transition from a DCCO mode to normal torque delivery mode can vary widely based on both the nature of the torque request and NVH/performance tradeoffs selected by the engine designer. Some representative transition strategies are discussed below with reference to flow charts of Fig. 2.

The transition strategy may vary based significantly based on the nature of the torque request. For example, when the driver presses heavily on the accelerator pedal (sometimes referred to herein as "pedal stomp"), it might be presumed that immediate torque delivery is of highest importance and transitory NVH concerns may be deemed less of a concern. Thus, when the torque request is responsive to pedal stomp, the controller may activate all of the cylinders at the earliest available opportunity and immediately operate the cylinders at full (or maximum available) power as represented by boxes 305 and 308 of Fig. 2. In addition, torque from the electric motor can also be applied in response to the pedal stomp.

The controller also determines a desired intake manifold pressure as represented by box 311. The desired pressure may then be compared to the actual (current) manifold pressure as represented by box 314. Due to the throttle leakage problem described above, the current manifold pressure will very often (but not always) be above the desired manifold pressure. If the current manifold pressure is at or lower than the desired manifold pressure, then the cylinders may be activated as appropriate to deliver the desired torque. When the engine controller supports skip fire engine operation, the torque may be delivered using skip fire control or using all cylinder operation, whichever is appropriate based on the nature of the torque request as represented by box 317. Alternatively, if the current manifold pressure is above the desired manifold pressure, then some of the described transitions techniques can be employed as represented by the "Yes" branch descending from box 320.

As described above, the manifold pressure can be drawn down by pumping air through some or all of the cylinders. NVH issues can typically be mitigated by reducing the manifold pressure to the desired level before firing any cylinders. However, waiting for the manifold pressure to be reduced by pumping air through the cylinders inherently introduces a delay in the torque delivery. The length of the pumping delay will vary as a function of both current engine speed and the differential between the current and desired manifold pressure. Typically the delays are relatively short, so in many circumstances, it may be appropriate to delay the torque delivery until the manifold pressure has been reduced to the target level by pumping air through one or more of the cylinders as represented by the "Yes" branch descending from box 320. In other circumstances, it may be desirable to begin torque delivery as soon as possible. In such circumstances the engine can be operated in a skip fire mode to deliver the desired torque, while pumping air through the cylinders during skipped working cycles until the manifold pressure is reduced to the desired level as represented by box 323. Once the desired manifold pressure is attained (represented by check 326), the desired torque can be delivered using any desired approach, including all cylinder operation, skip fire operation, or reduce displacement operation as represented by box 329. When skip fire operation is used to deliver the desired torque, the cylinders are preferably deactivated during skipped working cycles once the desired manifold pressure is attained.

It should be apparent that an advantage of using skip fire operation during the transition is that the desired level of torque can be delivered without requiring, or reducing the need to use, fuel inefficient techniques such spark retard to reduce the engine's torque output. Pumping air through cylinders during skipped working cycles has the advantage of more quickly reducing manifold pressure than would occur using skip fire with cylinder deactivation during skipped working cycles.

It should be appreciated that the described skip fire with air pumping approach can be coupled with other torque management strategies to further reduce NVH issues when appropriate. For example, in engines that facilitate variable valve lift, the valve lift can be modified in conjunction with the skip fire/air pumping to further reduce NVH concerns. In another example, spark retard can also be used when appropriate to further manage torque delivery. Therefore, it should be apparent that skip fire with air pumping is a tool that can be utilized in a wide variety of applications and in conjunction with a wide variety of other torque management strategies to help mitigate NVH concerns when transitioning out of DCCO operation.

Although skip fire operation is primarily described, it should be appreciated that somewhat similar benefits can be obtained using a variable displacement type approach in which a first set of cylinders are operated (fired) and a second set of cylinders pump air during the transition. In still other embodiments, a first set of cylinder can be operated in a skip fire mode (during the transition) while a second set of cylinders pump air during the transition. That is, the cylinders in the skip fire set may be selectively fired and selectively skipped through the transition - with or without air pumping through the skipped cylinders in that set.

Returning to box 320, there may be times when torque delivery can be delayed sufficiently such that the intake manifold pressure air can be reduced to the desired level by pumping air through one or more of the cylinders before torque deliver begins as represented by the "Yes" branch from box 320. In this case, the controller can determine the number of pumping cycles (referred to as "DFCO working cycles" in box 332). Air is then pumped through one or more of the cylinders for the determined number of working cycles as represented by box 335 at which point the engine can be operated as desired to deliver the desired torque.

Although the flowchart of Fig. 2 illustrates DFCO pumping and skip fire w/ air pumping as separate paths, it should be appreciated that in other circumstances, the two approaches can be used together (and/or in conjunction with other torque management schemes) in various hybrid approaches. For example, in some circumstances, it may be desirable to pump air through all of the cylinders for a short period (e.g. for one engine cycle) and thereafter operate in the skip fire with air pumping mode until the manifold pressure is reduced to the desired level. Such an approach can shorten the delay until torque delivery begins, while possibly mitigating certain NVH effects as compared to immediately entering the skip fire with air pumping mode.

As will be appreciated by those familiar with the art, pumping large volumes of air through an engine can saturate the catalytic converter thereby raising potential emissions concern. Therefore, in some circumstances, emissions concerns may limit the number of air pumping working cycles that can be used during the transition from DCCO operation to the desired operational state - similarly to the way emissions concerns currently limit the use of fuel cut-off DFCO. However, it should be apparent that in virtually all cases, the use of DCCO as opposed to DFCO will prolong the period in which fuel is not needed, thereby improving fuel efficiency. The described skip fire with air pumping approach has the additional advantage of reducing the number of skipped working cycles that are needed to reduce the intake manifold pressure to the desired level, since the fired working cycles typically draw substantially the same amount of air as air pumping working cycles.

In some of the described embodiments, the controller predetermines the number of air pumping (and or fired) working cycles required to reduce the manifold pressure to a desired level. This is very practical since the manifold filling and drawdown dynamics can relatively easily be characterized. In some embodiments, the appropriate number of air pumping working cycles and/or skip fire with air pumping transition sequence suitable for use given any current and target engine state can be found through the use of look-up tables. In other embodiments, the required number of air pumping working cycles and/or skip fire with air pumping transition sequence can be calculated dynamically at the time of a transition. In still other embodiments, predefined sequences can be used to define the appropriate DFCO delay or skip fire with air pumping transition sequence.

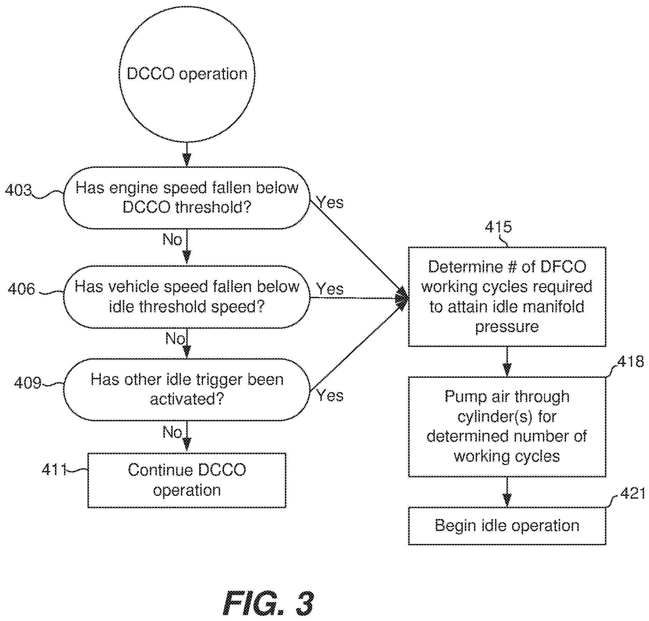

Transitioning from DCCO to idle operation can often be thought of as a special case of a torque request. Fig. 3 is a flow chart that illustrates a non-exclusive method of transitioning from DCCO to idle. As discussed above, there are a number of different triggers that may initiate a transition from DCCO to idle. One common trigger is when the engine speed falls below a DCCO exit threshold as represented by box 403. In some implementations, another trigger may be based on vehicle speed as represented by box 406. In different implementations, there may be a variety of other idle triggers as well, as represented by box 409. In general, DCCO operation will continue until a transition trigger is reached or the engine is turned off as represented by box 411.

Typically, when a transition to idle is commanded the controller will have time to pump the intake manifold down to the desired idle manifold pressure before any cylinder firing begins. Therefore, in the illustrated embodiment, when an idle transition triggers, the control logic determines the number of air pumping working cycles are required to reduce the manifold pressure to the desired target pressure as represented by box 415. In some embodiments, a lookup table can be used to define the number of air pumping working cycles based on one or two simple indices such as current manifold pressure and/or engine speed. The cylinders are then activated to pump air for the designated number of working cycles to reduce the manifold pressure to the desired level as represented by box 418. Thereafter, the engine may transition to a normal idle operating mode as represented by box 421.

In other embodiments a default of a fixed number of air pumping working cycles can be used any time a transition from DCCO to idle is commanded unless specified criteria are not met.

As mentioned above, the applicant has developed a dynamic skip fire engine control technology that is well-suited for improving the fuel efficiency of internal combustion engines. In general, skip fire engine control contemplates selectively skipping the firing of certain cylinders during selected firing opportunities. Thus, for example, a particular cylinder may be fired during one firing opportunity and then may be skipped during the next firing opportunity and then selectively skipped or fired during the next. Skip fire engine operation is distinguished from conventional variable displacement engine control in which a fixed set of cylinders are deactivated substantially simultaneously during certain low-load operating conditions and remain deactivated as long as the engine maintains the same displacement. In conventional variable displacement control, the sequence of specific cylinders firings will always be exactly the same for each engine cycle so long as the engine remains in the same displacement mode, whereas that is often not the case during skip fire operation. For example, an 8-cylinder variable displacement engine may deactivate half of the cylinders (i.e. 4 cylinders) so that it is operating using only the remaining 4 cylinders. Commercially available variable displacement engines available today typically support only two or at most three fixed mode displacements.

In general, skip fire engine operation facilitates finer control of the effective engine displacement than is possible using a conventional variable displacement approach because skip fire operation includes at least some effective displacements in which the same cylinder(s) are not necessarily fired and skipped each engine cycle. For example, firing every third cylinder in a 4 cylinder engine would provide an effective displacement of 1/3^{rd} of the full engine displacement, which is a fractional displacement that is not obtainable by simply deactivating a set of cylinders.

With dynamic skip fire, firing decisions may be made on a firing opportunity by firing opportunity basis, as opposed to simply using predefined firing patterns. By way of example, representative dynamic skip fire controllers are described in U.S. Patent Nos. 8,099,224 and 9,086,020, both of which are incorporated herein by reference.

When operating in a skip fire mode, the cylinders are generally deactivated during skipped working cycles in order to reduce pumping losses; however, as previously discussed, there are certain cases where a skip working cycle may pump air. Therefore, engines configured to operate in a dynamic skip fire mode preferably have hardware suitable for deactivating each of the cylinders. This cylinder deactivation hardware can be used to help support the described deceleration cylinder cutoff.

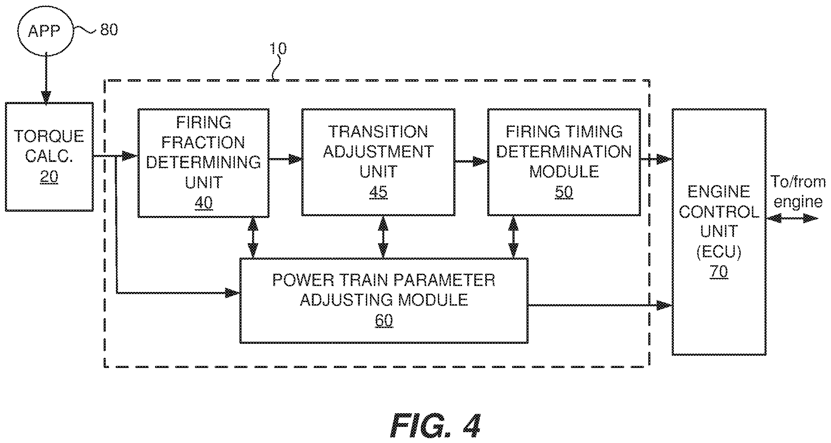

The applicant has previously described a variety of skip fire controllers. A skip fire controller 10 suitable for implementing the present invention is functionally illustrated in Fig. 4. The illustrated skip fire controller 10 includes a torque calculator 20, a firing fraction determining unit 40, a transition adjustment unit 45, a firing timing determination unit 50, and a power train parameter adjusting module 60. The torque calculator 20 may obtain a driver requested torque via an accelerator pedal position (APP) sensor 80. For the purposes of illustration, skip fire controller 10 is shown separately from engine control unit (ECU) 70, which orchestrates the actual engine setting. However, it should be appreciated that in many embodiments the functionality of the skip fire controller 10 may be incorporated into the ECU 70. Indeed incorporation of the skip fire controller into an ECU or power train control unit is expected to be a common implementation.

The control methods described above with respect to Figs. 1-3 are arranged to be directed by the ECU. The skip fire transitions and operation may be directed by skip fire controller 10.

A feature of DCCO mode operation is that there is little air flow into the intake manifold, since the throttle blade may be closed and all engine cylinders deactivated. This engine condition provides unique conditions to conduct engine diagnostics. In particular, air leakage due to breaks in the air intake system can be diagnosed by monitoring the rate of change in MAP with the throttle blade closed and all cylinders deactivated. Increases in the rate of change in the MAP, i.e. the intake manifold filling quicker than anticipated, are indicative of air intake system leakage. When it is determined that the intake manifold is filling quicker than expected, a diagnostic error code or other suitable warning signal can be supplied to the engine controller, an engine diagnostics module or other suitable device.

DCCO mode also provides a diagnostic window to verify correct valve deactivation. Correctly operating DCCO mode halts all gas flow from the engine through the exhaust system. Should a cylinder fail to deactivated air will be pumped into the exhaust system. Excess oxygen in the exhaust system, associated with the uncombusted air pumping through a cylinder, may be detected by an exhaust system oxygen monitor. When such excess oxygen is detected in the exhaust system, a diagnostic error code or other suitable warning signal can be supplied to the engine controller, an engine diagnostics module or other suitable device.

Another diagnostic that can be performed during DCCO mode is testing the exhaust system for leaks. In the presence of an exhaust system leak, the oxygen sensor would sense increased oxygen levels during DCCO. The magnitude of the oxygen level increase would likely be smaller than that associated with a cylinder deactivation failure. Its event timing behavior would also be different, since an exhaust system leak would have a continuous oxygen inflow whereas a pumping cylinder will only introduce oxygen into the exhaust system during the cylinder exhaust stroke. Thus by analyzing the time behavior of the sensed oxygen level, relative to a baseline value, an exhaust system leak can be distinguished from a cylinder deactivation failure. When such an exhaust leak is detected, a diagnostic error code or other suitable warning signal can be supplied to the engine controller, an engine diagnostics module or other suitable device.

Detection of any of these failures, air leakage into the air intake system, air leakage into the exhaust system, or cylinder deactivation failure may optionally be signaled to a driver by an indicator, so he/she is aware of the problem and can take appropriate corrective action.

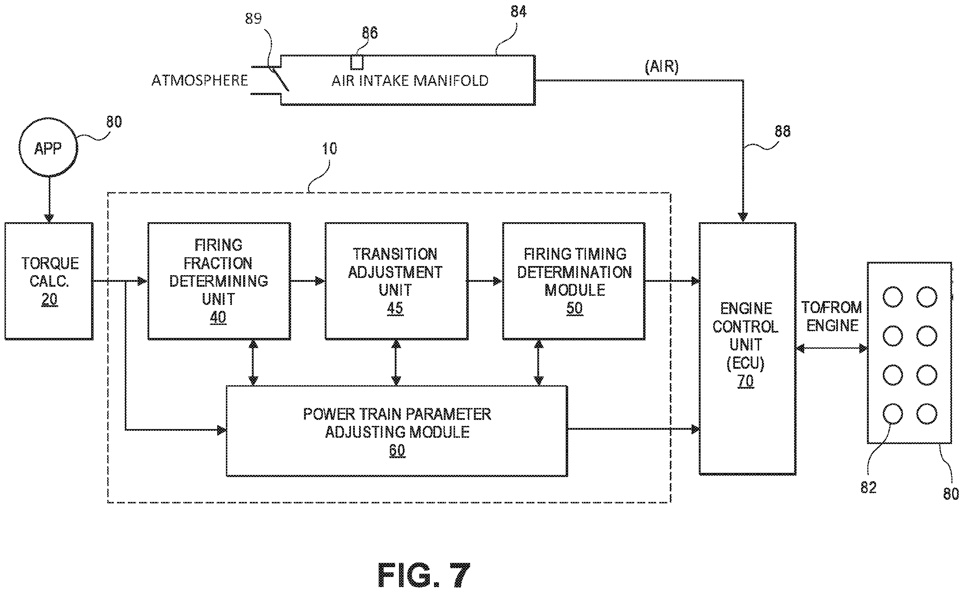

The applicant has previously described a variety of skip fire controllers. A skip fire controller 10 suitable for implementing another nonexclusive embodiment is functionally illustrated in Fig. 7. In this particular embodiment, the controller 10 is arranged to control the operation of an engine 80 having a multiplicity of working chambers or cylinders 82. As is well known in the art, an air intake manifold 84 is provided to supply air via air supply 88 to the working chambers 82 of the engine 80 during operation. A throttle plate 89 controls air flow from the atmosphere into the intake manifold 84. During DCCO operation the throttle may be closed to minimize air leakage into the intake manifold. The manifold 84 further includes a pressure sensor 86 that is provided to measure the actual air pressure in the manifold (MAP) and provide the measured pressure value to the controller 10.

In the particular embodiment shown, the engine 80 has eight working chambers 82. By no means should the number of chambers shown be construed as limiting. The various embodiments and principles of the present invention, as contemplated herein, may be used in cooperation with an engine 80 having any number of working chambers 82.

The illustrated skip fire controller 10 includes a torque calculator 20, a firing fraction determining unit 40, a transition adjustment unit 45, a firing timing determination unit 50, and a power train parameter adjusting module 60. The torque calculator 20 may obtain a driver requested torque via an accelerator pedal position (APP) sensor 80. For the purposes of illustration, skip fire controller 10 is shown separately from engine control unit (ECU) 70, which orchestrates the actual engine setting. However, it should be appreciated that in many embodiments the functionality of the skip fire controller 10 may be incorporated into the ECU 70. Indeed incorporation of the skip fire controller into an ECU or power train control unit is expected to be a common implementation.

The control methods described above with respect to Figs. 1-3 and Figs 7, 9A-9D as described below are arranged to be directed by the ECU. The skip fire transitions and operation may be directed by skip fire controller 10.

A feature of DCCO mode operation is that there is little air flow into the intake manifold, since the throttle plate 89 may be closed and all engine cylinders deactivated. This engine condition provides unique conditions to conduct engine diagnostics. In particular, air leakage due to breaks in the air intake system can be diagnosed by monitoring the rate of change in MAP with the throttle blade closed and all cylinders deactivated. Increases in the rate of change in the MAP, i.e. the intake manifold filling quicker than anticipated, are indicative of air intake system leakage. When it is determined that the intake manifold is filling quicker than expected, a diagnostic error code or other suitable warning signal can be supplied to the engine controller, an engine diagnostics module or other suitable device.

DCCO mode also provides a diagnostic window to verify correct valve deactivation. Correctly operating DCCO mode halts all gas flow from the engine through the exhaust system. Should a cylinder fail to deactivate, air will be pumped into the exhaust system. Excess oxygen in the exhaust system, associated with the uncombusted air pumping through a cylinder, may be detected by an exhaust system oxygen monitor. When such excess oxygen is detected in the exhaust system, a diagnostic error code or other suitable warning signal can be supplied to the engine controller, an engine diagnostics module or other suitable device.

Another diagnostic that can be performed during DCCO mode is testing the exhaust system for leaks. In the presence of an exhaust system leak, the oxygen sensor would sense increased oxygen levels during DCCO. The magnitude of the oxygen level increase would likely be smaller than that associated with a cylinder deactivation failure. Its event timing behavior would also be different, since an exhaust system leak would have a continuous oxygen inflow whereas a pumping cylinder will only introduce oxygen into the exhaust system during the cylinder exhaust stroke. Thus by analyzing the time behavior of the sensed oxygen level, relative to a baseline value, an exhaust system leak can be distinguished from a cylinder deactivation failure. When such an exhaust leak is detected, a diagnostic error code or other suitable warning signal can be supplied to the engine controller, an engine diagnostics module or other suitable device.

Detection of any of these failures, air leakage into the air intake system, air leakage into the exhaust system, or cylinder deactivation failure may optionally be signaled to a driver by an indicator, so he/she is aware of the problem and can take appropriate corrective action. As discussed above, during DCCO operation, no air is pumped out of the manifold 84. As a result, the air pressure will often drift upward toward barometric, or equivalently atmospheric, pressure. To alleviate the problem of a large cylinder air charge when a subsequent torque request is made, the DFCO mode is used to pump down the air pressure in the manifold 84 before torque delivery. This technique significantly improves NVH. Several issues arise with this approach however. First, fuel may be required to recondition the catalytic converter in the exhaust system after pumping air in the DFCO mode. Second, the pressure in the manifold 84 may be low enough that no pumping is required, meaning intervening operation in the DFCO mode is not actually needed. Third, torque generation is delayed until after the DFCO mode is complete. While this often is not a problem, when an urgent torque request is made engine responsiveness is critical. Fourth, at low manifold pressures, operation in DFCO may cause undesirable engine braking.

The Applicants have found, as described in the various embodiments below, that air pressure measurement by the sensor 86 in the air intake manifold 84 can be used to determine the number of DFCO mode working cycles that are required to reduce the manifold pressure to a threshold level. Since the working cycle duration is based on the known engine speed, the timing for terminating DFCO operation can be determined or calculated. In other words, the air pressure in the manifold 84 as measured by the sensor 86 can be used to define the duration of the DFCO operation and/or when to terminate DFCO operation in terms of either a number of DFCO working cycles or a time for DFCO operation.

Referring to Fig. 7, a look up table 500 providing a number of pumping working cycles for reducing different intake manifold absolute pressure values to a threshold level is shown. In this particular embodiment, various manifold absolute pressure ("MAP") values are provided in the left column in ten kPa increments from 40 to 100, whereas the number of chamber pumping working cycles needed to reduce the pressure in the manifold 84 to the threshold is provided in the right column. In this particular example, the specified number of chamber pumping cycles is (0, 0, 6, 8, 10, 12 and 12) for kPa increments from 40 to 100 respectively. In other words, for the "threshold" in this example is 50 kPa, and at MAP values at this pressure level or less, no chamber pumping working cycles are required. On the other hand, for MAP values greater than 50 kPa, multiple chamber pumping working cycles are needed to pump the air pressure in the manifold 84 down to the threshold or some other desirable pressure level target. In one particular embodiment, the chamber pumping working cycles are realized by operating working chambers 82 or cylinders of engine 80 in the DFCO mode. It should be understood that DFCO operation is merely an option and that any engine operation that results in pumping of air through working chamber(s) may be used. For example, a small amount of fuel may be injected late in the working cycle to assist in maintaining the oxidation/reduction balance in the catalytic converter.

It should be understood that the particular threshold pressure, MAP kPa values, and number of chamber pumping working cycles values provided in table 500 are merely exemplary and are provided for illustrative purposes. In actual implementation embodiments, the number of chamber pumping working cycle values, MAP kPa values, and kPa threshold value provided in the table may widely vary based on a number of factors, including but not limited to, engine displacement, cylinder size and/or the number of cylinders, engine operating conditions, ambient air conditions, barometric pressure, etc. For example, cylinder volumetric efficiency, which is indicative of air pumping efficiency, depends on intake and exhaust valve timing and engine speed and the values in table 500 may be adjusted based on valve timing and engine speed. For engines with cam actuated valves the valve timing is dependent on the cam phase angle.

It should be appreciated that the information contained in lookup table 500 can be expressed in alternative ways. For example, rather than describing DFCO operation in terms of a number of DFCO pumping cycles it may alternatively be expressed as a time or period of DFCO operation. The number of DFCO pumping cycles can be converted to a time period using a measured engine speed. Engine speed will likely change over the period of DFCO operation so a model of the engine speed over DFCO operation may be used to determine the total period of DFCO operation.

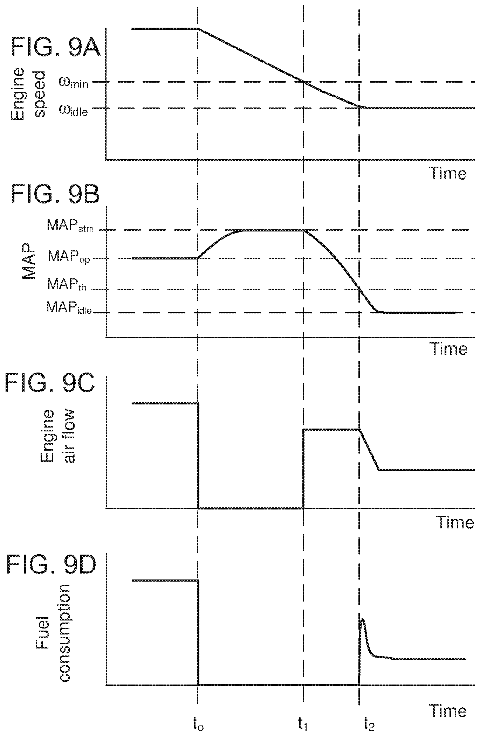

FIGS. 9A-9D depict a simplified schematic of representative behaviors of various engine parameters versus time during transitions from torque generation, to a DCCO event, to an idle event.

Prior to time t₀, the vehicle is assumed to be operating using engine supplied torque to drive the vehicle. The MAP is at some operating level MAPₒₚ below atmospheric pressure.

The DCCO event begins at time t₀ when fuel consumption is cut-off in response to a request for zero powertrain torque. As a result, air flow or pumping is reduced as shown in Fig. 9C and fuel consumption is reduced as shown in Fig. 9D.

Coincident with this zero-torque request, the vehicle wheels are disengaged from the engine, so both can spin independently. It should be appreciated that while in this example the vehicle wheels are disengaged from the engine, this is not always the case. For example, if the vehicle is initially operating at a high speed and high transmission gear, the wheels and engine may remain engaged until the vehicle speed has slowed to a certain level.

Since the engine is not producing torque, the engine speed (Fig. 9A) decreases due to frictional power losses.

As illustrated in Fig. 9B, the MAP increases following time t₀ during DCCO operation, drifting towards atmospheric pressure. In this case, the DCCO event is of sufficient duration that the MAP reaches atmospheric pressure MAPₐₜₘ; however, this is not always the case. As the engine speed drops, at time t₁ the engine speed reaches ωₘᵢₙ, which is a minimum speed for DCCO operation. The minimum speed for DCCO operation is set somewhat higher than the idle speed ω_{idle.} For example, if the idle speed is 700 rpm the minimum DCCO speed may be 1000 rpm.

At time t₁ the controller 10 causes the engine to switch from DCCO mode to DFCO mode. As previously described, the controller 10 can determine a number of pumping cycles required to reduce the MAP to below a threshold level before fueling the engine and initiating combustion events. As these pumping cycles are executed between times t₁ and t₂, the MAP drops as illustrated in Fig. 9B as air flow or pumping through the engine occurs as illustrated in Fig. 9C.

At time t₂ the MAP has dropped to the MAP threshold (MAPₜₕ) and DFCO operation ends. Fuel flow is initiated as illustrated in Fig. 9D and combustion resumes in a least some of the working chambers generating torque to maintain the engine speed at an idle speed, ω_{idle}. There may be a spike in the fuel consumption as shown in Fig. 9D to rebalance the oxidation/reduction balance in the catalytic converter. The MAP level may continue to drop to a MAP_{idle} level as shown in FIG. 9B. Alternatively, MAPₜₕ may be substantially equal to MAP_{idle} and the MAP may remain substantially constant. To further smooth the engine transition into idle, as time approaches t₂ when DFCO operation is terminated, deactivated working cycles may be interspersed with pumping working cycles. This results in a more gradual engine deceleration, as the pumping induced engine deceleration increases with decreasing MAP. The pattern of pumping and deactivated working cycles may be defined in a look up table or may be dynamically calculated.

Although only a few specific embodiments and transition strategies have been described in detail, it should be appreciated that the invention may be implemented in many other forms without departing from the scope of the invention as defined by the appended claims. The described algorithms can be implemented using software code executing on a processor associated with an engine control unit or powertrain control module or other processing unit, in programmable logic or discrete logic. The described approach is particularly well suited for use on engines having multiple working chambers although the same approach can be used on a single cylinder engine as well. Therefore, the present embodiments should be considered illustrative and not restrictive and the invention is not to be limited to the details given herein, but may be modified within the scope of the appended claims.

As used herein, the term module refers to an application specific integrated circuit(ASIC), an electronic circuit, a processor (shared, dedicated, or group) and memory that executes one or more software or firmware programs, a combinational logic circuit, and/or other suitable components that provide the described functionality.

The foregoing description is merely exemplary in nature and is not intended to limit the present disclosure, application, or uses. It should be understood that throughout the drawings, corresponding reference numerals indicate like or corresponding parts and features. Therefore, the present embodiments should be considered illustrative and not restrictive and the invention is not to be limited to the details given herein, but may be modified within the scope of the appended claims.

## Claims

1. A method of operating a vehicle having a drive train, an electric motor/generator and an engine, the engine having a crankshaft, an intake manifold and a plurality of working chambers, the method comprising:
while the engine is operating, deactivating all the working chambers in response to a no engine torque request such that none of the working chambers are fired and no air is pumped through the working chambers as the crankshaft rotates; and
disengaging the engine from the drive train so that vehicle motion and crankshaft rotation are no longer mechanically coupled, wherein the crankshaft rotation rate is controlled while the engine is disengaged from the drive train by adding or removing torque from the crankshaft by the electric motor/generator, the crankshaft rotation rate being controlled to ensure that the crankshaft continues to rotate throughout the duration of the no engine torque request, wherein the engine is kept spinning at a low speed, such as an engine ignition speed or engine idle speed.

2. A method as recited in claim 1 wherein the engine and motor/generator are mechanically coupled so that they rotate together and have the same rotation rates.

3. A method as recited in claim 1 wherein the engine and the electric motor/generator are mechanically coupled via a mechanical coupling selected from the group consisting of a belt, a chain, a common shaft and gears.

4. A method as recited in any of claims 1-3 wherein the crankshaft rotation rate is allowed to drop to an engine idle speed and is maintained at the engine idle speed by the electric motor/generator while the engine is disengaged from the drive train.

5. A method as recited in any of claims 1-3 wherein the crankshaft rotation rate is allowed to drop to an engine ignition speed and is maintained at the engine ignition speed by the electric motor/generator while the engine is disengaged from the drive train.

6. A method as recited in any of claims 1-3 wherein the crankshaft rotation rate is maintained above an engine ignition speed by the electric motor/generator while the engine is disengaged. from the drive train.

7. A method as recited in any of claims 1-6 wherein each working chamber has an intake valve and an exhaust valve and each working chamber is deactivated by holding at least one of the intake valve and exhaust valve closed as the crankshaft rotates.

8. A method as recited in any of claims 1-3 further comprising:
ramping up the crankshaft rotation rate from a first engine speed to a second engine speed that is larger than the first engine speed by applying torque from the motor/generator;
deactivating at least one of the intake or exhaust valve of a first working chamber so that no air is pumped through the first working chamber while the crankshaft is rotating;
pumping air through a second working chamber without fueling the second working chamber so as to reduce pressure in an intake manifold that provides an air reservoir for engine air induction.

9. The method as recited in claim 8, wherein the first engine speed is an engine ignition speed.

10. The method as recited in claim 8, wherein the second engine speed is an engine idle speed.

11. An engine controller comprising a processor and a software code, which, when executed by the processor, implement the method of any of claims 1-10.

## Patentansprüche

1. Verfahren zum Betreiben eines Fahrzeugs mit einem Antriebsstrang, einem Elektromotor/Generator und einer Brennkraftmaschine, wobei die Brennkraftmaschine eine Kurbelwelle, einen Einlasskrümmer und eine Vielzahl von Arbeitskammern aufweist, wobei das Verfahren umfasst:
während die Brennkraftmaschine in Betrieb ist, Deaktivieren aller Arbeitskammern in Reaktion auf eine Kein-Brennkraftmaschinendrehmoment-Anforderung, sodass keine der Arbeitskammern gezündet und keine Luft durch die Arbeitskammern gepumpt wird, wenn sich die Kurbelwelle dreht; und
Lösen der Brennkraftmaschine vom Antriebsstrang, sodass Fahrzeugbewegung und Kurbelwellendrehung nicht mehr mechanisch gekoppelt sind, wobei die Kurbelwellendrehzahl geregelt wird, während die Brennkraftmaschine vom Antriebsstrang gelöst ist, indem durch den Elektromotor/Generator der Kurbelwelle Drehmoment zugeführt oder von ihr entfernt wird, wobei die Kurbelwellendrehzahl so geregelt wird, dass sichergestellt ist, dass sich die Kurbelwelle während der Dauer der Kein-Brennkraftmaschinendrehmoment-Anforderung weiterhin dreht, wobei die Brennkraftmaschine bei einer niedrigen Drehzahl, beispielsweise einer Brennkraftmaschinen-Zünddrehzahl oder Brennkraftmaschinen-Leerlaufdrehzahl, am Drehen gehalten wird.

2. Verfahren nach Anspruch 1, wobei die Brennkraftmaschine und der Motor/Generator mechanisch gekoppelt sind, sodass sie sich gemeinsam drehen und die gleichen Drehzahlen aufweisen.

3. Verfahren nach Anspruch 1, wobei die Brennkraftmaschine und der Elektromotor/Generator über eine mechanische Kopplung, ausgewählt aus der Gruppe, die aus einem Riemen, einer Kette, einer gewöhnlichen Welle und Zahnrädern besteht, mechanisch gekoppelt sind.

4. Verfahren nach einem der Ansprüche 1-3, wobei zugelassen wird, dass die Kurbelwellendrehzahl auf eine Brennkraftmaschinen-Leerlaufdrehzahl sinkt und durch den Elektromotor/Generator auf der Brennkraftmaschinen-Leerlaufdrehzahl gehalten wird, während die Brennkraftmaschine vom Antriebsstrang gelöst ist.

5. Verfahren nach einem der Ansprüche 1-3, wobei zugelassen wird, dass die Kurbelwellendrehzahl auf eine Brennkraftmaschinen-Zünddrehzahl sinkt und durch den Elektromotor/Generator auf der Brennkraftmaschinen-Zünddrehzahl gehalten wird, während die Brennkraftmaschine vom Antriebsstrang gelöst ist.

6. Verfahren nach einem der Ansprüche 1-3, wobei die Kurbelwellendrehzahl durch den Elektromotor/Generator oberhalb einer Brennkraftmaschinen-Zünddrehzahl gehalten wird, während die Brennkraftmaschine vom Antriebsstrang gelöst ist.

7. Verfahren nach einem der Ansprüche 1-6, wobei jede Arbeitskammer ein Einlassventil und ein Auslassventil aufweist und jede Arbeitskammer durch Geschlossenhalten mindestens eines von dem Einlassventil und dem Auslassventil, während sich die Kurbelwelle dreht, deaktiviert wird.

8. Verfahren nach einem der Ansprüche 1-3, ferner umfassend:
Erhöhen der Kurbelwellendrehzahl von einer ersten Brennkraftmaschinendrehzahl auf eine zweite Brennkraftmaschinendrehzahl, die größer als die erste Brennkraftmaschinendrehzahl ist, durch Anwenden von Drehmoment vom Motor/Generator;
Deaktivieren mindestens eines von dem Einlass- oder Auslassventil einer ersten Arbeitskammer, sodass während des Drehens der Kurbelwelle keine Luft durch die erste Arbeitskammer gepumpt wird;
Pumpen von Luft durch eine zweite Arbeitskammer, ohne der zweiten Arbeitskammer Kraftstoff zuzuführen, sodass der Druck in einem Einlasskrümmer, der einen Luftbehälter für Brennkraftmaschinen-Luftansaugung bereitstellt, reduziert wird.

9. Verfahren nach Anspruch 8, wobei die erste Brennkraftmaschinendrehzahl eine Brennkraftmaschinen-Zünddrehzahl ist.

10. Verfahren nach Anspruch 8, wobei die zweite Brennkraftmaschinendrehzahl eine Brennkraftmaschinen-Leerlaufdrehzahl ist.

11. Motorsteuerung, umfassend einen Prozessor und einen Softwarecode, der, wenn er von dem Prozessor ausgeführt wird, das Verfahren nach einem der Ansprüche 1-10 umsetzt.

## Revendications

1. Méthode de fonctionnement d'un véhicule possédant un groupe motopropulseur, un moteur/générateur électrique et un moteur, le moteur possédant un vilebrequin, un collecteur d'admission et une pluralité de chambres de travail, la méthode comprenant :
pendant que le moteur fonctionne, la désactivation de toutes les chambres de travail en réponse à une demande d'absence de couple moteur, de sorte qu'aucune des chambres de travail n'est allumée et qu'aucun air n'est pompé à travers les chambres de travail lorsque le vilebrequin tourne ; et
le désaccouplement du moteur du groupe motopropulseur de sorte que le mouvement du véhicule et la rotation du vilebrequin ne sont plus couplés mécaniquement, dans laquelle la fréquence de rotation du vilebrequin est contrôlée pendant que le moteur est désaccouplé du groupe motopropulseur en ajoutant ou en retirant du couple du vilebrequin par le moteur/générateur électrique, la fréquence de rotation du vilebrequin étant contrôlée afin d'assurer que le vilebrequin continue à tourner pendant toute la durée de la demande d'absence de couple du moteur, dans laquelle le moteur est maintenu en rotation à une basse vitesse, tel qu'une vitesse d'allumage du moteur ou une vitesse de ralenti du moteur.

2. Méthode telle qu'énoncée dans la revendication 1, dans laquelle le moteur et le moteur/générateur sont couplés mécaniquement de sorte qu'ils tournent ensemble et ont les mêmes fréquences de rotation.

3. Méthode telle qu'énoncée dans la revendication 1, dans laquelle le moteur et le moteur/générateur électrique sont couplés mécaniquement via un couplage mécanique sélectionné à partir du groupe constitué d'une courroie, d'une chaîne, d'un arbre ordinaire et d'engrenages.

4. Méthode telle qu'énoncée dans une quelconque des revendications 1 à 3, dans laquelle la fréquence de rotation du vilebrequin est autorisée à baisser à une vitesse de ralenti du moteur et est maintenue à la vitesse de ralenti du moteur par le moteur/générateur électrique pendant que le moteur est désaccouplé du groupe motopropulseur.

5. Méthode telle qu'énoncée dans une quelconque des revendications 1 à 3, dans laquelle la fréquence de rotation du vilebrequin est autorisée à baisser à une vitesse d'allumage du moteur et est maintenue à la vitesse d'allumage du moteur par le moteur électrique/générateur pendant que le moteur est désaccouplé du groupe motopropulseur.

6. Méthode telle qu'énoncée dans une quelconque des revendications 1 à 3, dans laquelle la fréquence de rotation du vilebrequin est maintenue au-dessus d'une vitesse d'allumage du moteur par le moteur électrique/générateur pendant que le moteur est désaccouplé du groupe motopropulseur.

7. Méthode telle qu'énoncée dans une quelconque des revendications 1 à 6, dans laquelle chaque chambre de travail possède une soupape d'admission et une soupape d'échappement et chaque chambre de travail est désactivée en maintenant au moins l'une de la soupape d'admission et de la soupape d'échappement fermées alors que le vilebrequin tourne.

8. Méthode telle qu'énoncée dans une quelconque des revendications 1 à 3, comprenant par ailleurs :
l'augmentation de la fréquence de rotation du vilebrequin d'une première vitesse du moteur à une seconde vitesse du moteur plus élevée que la première vitesse du moteur en appliquant le couple issu du moteur/générateur;
la désactivation d'au moins l'une de la soupape d'admission ou d'échappement d'une première chambre de travail, de sorte qu'aucun air n'est pompé à travers la première chambre de travail pendant que le vilebrequin tourne ;
le pompage d'air à travers une seconde chambre de travail sans ravitaillement de la seconde chambre de travail de manière à réduire la pression dans un collecteur d'admission qui présente un réservoir d'air destiné à une induction d'air du moteur.

9. Méthode telle qu'énoncée dans la revendication 8, dans laquelle la première vitesse du moteur est une vitesse d'allumage du moteur.

10. Méthode telle qu'énoncée dans la revendication 8, dans laquelle la seconde vitesse du moteur est une vitesse de ralenti du moteur.

11. Commande de moteur comportant un processeur et un code logiciel qui, lorsqu'elle est exécutée par le processeur, met en oeuvre la méthode selon une quelconque des revendications 1 à 10.
